# EUROPÄISCHE PATENTSCHRIFT

(11) **EP 0 799 737 B1**
(45) Veröffentlichungstag und Bekanntmachung des Hinweises auf die Patenterteilung: **02.06.1999**
(21) Anmeldenummer: 97104982.0
(22) Anmeldetag: 24.03.1997
(51) Int. Cl.: B60K 7/00, B61C 9/48

(54) **Einzelradantrieb für ein elektrisch angetriebenes Fahrzeug**
Single wheel drive for an electrically driven vehicle
Propulsion de roue indépendante pour véhicule à propulsion électrique

(30) Priorität: 04.04.1996 DE 19613665
(43) Veröffentlichungstag der Anmeldung: 08.10.1997
(73) Patentinhaber: SIEMENS AKTIENGESELLSCHAFT, 80333 München (DE)
(72) Erfinder: Pfannschmidt, Berd, Dipl.-Ing., 90574 Rosstal (DE)

(56) Entgegenhaltungen:
- EP-A- 0 042 017
- EP-A- 0 132 236
- DE-A- 2 208 036
- DE-A-19 531 956
- DE-C- 4 445 407

## Beschreibung

Die Erfindung betrifft einen Einzelradantrieb für ein elektrisch angetriebenes Fahrzeug, bei dem sich ein Fahrwerk über eine Primärfeder an einer stehenden Achse abstützt, wobei ein Innenläufer-Motor mit seinem Stator am Fahrwerk befestigt ist, wobei ein Treibrad an einem stehenden Träger drehbar gelagert ist und der Rotor des Motors sein Drehmoment über eine winkel- und axial-nachgiebige Koppelungseinrichtung, eine Getriebewelle und ein Planetengetriebe zum Treibrad überträgt.

Ein Einzelradantrieb dieser Art ist aus der DE 44 45 407 C1 bekannt. Nach diesem Vorschlag ist ein Motor mit seinem Stator an einem ersten Fahrwerksteil befestigt, wobei sich das erste Fahrwerksteil über eine Primärfederung an einem ungefederten zweiten Fahrwerksteil abstützt, auf dem das Einzelrad drehbar gelagert ist, und wobei der Rotor des Motors sein Drehmoment über eine Kopplungseinrichtung überträgt, deren radiale Beweglichkeit größer ist als der Federweg der Primärfederung. Bei einem derartigen Einzelradantrieb, der insbesondere für elektrisch angetriebene Schienenfahrzeuge geeignet ist, ist der Anteil an ungefederten Massen gering. Bei diesem gegen zwei Fahrwerksteile abgefederten Radnabenantrieb ist für die Anordnung des Motors eine besondere Treibradkonstruktion erforderlich. Der Motoraufbau bedingt ferner eine relativ große axiale Baulänge des gesamten Antriebsaggregates mit separater Bremsscheibe und erfordert große Radlager.

Aus der EP 0 042 017 A1 ist es bei einem Getriebemotor bekannt, ein mittig im Treibrad angeordnetes Planetengetriebe so auszubilden, daß das Hohlrad mit dem Treibrad verbunden und der Planetenträger mit der Achse verschraubt ist.

Aus der WO 93/09989 ist ein Einzelradantrieb für ein elektrisch angetriebenes Fahrzeug bekannt, bei dem sich ein erstes Fahrwerksteil über eine Primärfederung an einem ungefederten oder zum Teil ungefederten zweiten Fahrwerksteil abstützt.

Bei Niederflurschienenfahrzeugen, wie sie die Stadtwerke in Wien einsetzen, ist ein Antrieb mit einem senkrecht stehenden Elektromotor und mit einem Kegelradgetriebe zur Treibradachse vorgesehen. Nachteilig dabei ist das hohe Gewicht eines solchen Antriebsaggregates, der durch das Kegelradgetriebe bedingte geringere Wirkungsgrad in der Kraftübertragung und die vergleichsweise geringe Lebensdauer des Kegelradgetriebes. Außerdem ist wegen der seitlichen Anbringung des Motors neben dem Treibrad eine besondere Ausgestaltung des Fahrzeug-Lichtraumprofiles erforderlich.

Gegenstand der EP-A-760305 (Stand der Technik nach Art. 54(3)EPÜ) ist ein Einzelradantrieb, insbesondere für Niederflurschienenfahrzeuge, wobei das Antriebsaggregat axial neben dem Treibrad, zwischen Treibrad und der Wagenkastenaußenwand, angeordnet ist. Hierbei ist vorgesehen, daß der auf einer Hohlwelle sitzende Rotor des Motors über ein Planetengetriebe eine durch die Hohlwelle geführte Antriebswelle antreibt, daß dem dem Treibrad des Fahrzeuges zugewandten Ende der Antriebswelle eine elastische Kupplung zugeordnet ist, wobei die elastische Kupplung das Drehmoment des Motors auf das Treibrad überträgt, und daß das Antriebsaggregat gegen ein Fahrwerksteil abgefedert gehalten ist. Nach diesem Vorschlag muß die Kupplung das hochübersetzte Raddrehmoment übertragen und ist deshalb entsprechend groß zu dimensionieren. Auch diese Treibrad-Kupplung-Antriebsaggregat-Anordnung bedingt noch eine axiale Baulänge, die nur schwierig innerhalb des Wagenkastenprofils bei Niederflurschienenfahrzeugen, z.B. Straßenbahnfahrzeugen, unterbringbar ist.

Aufgabe der Erfindung ist es, einen Einzelradantrieb der eingangs genannten Art zu schaffen, der sich durch besonders geringe Abmessungen auszeichnet. Dies wird nach der Erfindung durch die Merkmale des Patentanspruches 1 erreicht. Hierbei wird insbesondere durch die Zuordnung des Getriebes zum Treibrad eine günstige Gewichtsverteilung sowie eine besonders geringe axiale Baulänge des Einzelradantriebes erreicht.

Vorteilhafte Ausführungen der Erfindung ergeben sich aus den Patentansprüchen 2 bis 25.

Beim erfindungsgemäßen Einzelradantrieb, der sich gegenüber den älteren Vorschlägen durch eine kompaktere und leichtere Bauart auszeichnet, ist der Großteil der Massen des Antriebes, insbesondere der Motor, voll abgefedert. Reaktionskräfte beim Ein- und Ausfederungsvorgang haben dabei nur geringe Auswirkungen auf den Fahrmotor und dessen Aufhängung im Fahrwerk. Da die Kupplungsteile, z.B. Bogenzahnkupplungen, lediglich das Motordrehmoment und nicht das hochübersetzte Raddrehmoment zu übertragen haben, ist eine kompaktere und leichtere Bauart möglich. Das Antriebsaggregat ist in einer axial sehr kurzen Bauform ausführbar und eignet sich besonders für Niederflurfahrzeuge, wie Straßenbahnen, Busse oder Bahnen, die wegen der Spur- und Wagenkastenbreite nur einen geringen Einbauraum für das Antriebsaggregat aufweisen. Der Antrieb nach der Erfindung zeichnet sich ferner dadurch aus, daß relativ große radiale Federwege zwischen Fahrwerk und Treibrad möglich sind.

Der Motor des erfindungsgemäßen Einzelradantriebes ist ohne den Ausbau von Fahrwerksteilen, des Treibrades und des Getriebes einfach auswechselbar. Eine Getriebeanordnung mittig im Treibrad schafft Platz für den Motor und eine Bremsvorrichtung im begrenzten Raum zwischen dem Treibrad und der Wagenkastenaußenwand. Die Anordnung des Treibrades mit dem darin oder daran integrierten Getriebe und dem zugeordneten Motor ergibt eine äußerst kompakte Bauform, wobei das Getriebegehäuse nahezu vollständig in das Treibrad integrierbar ist. Der erfindungsgemäße Einzelradantrieb ermöglicht die Einsparung von Lagern, da die Radlagerung gleichzeitig die Getriebelagerung bildet. Ein weiterer Vorteil ergibt sich aus der leichten Zugängigkeit und Wartung der Bremse, die außerdem gut kühlbar ist. Beim erfindungsgemäßen Einzelradantrieb ist das Getriebe zwischen ein äußeres und ein inneres Radlager gesetzt werden, so daß eine vorteilhafte breite Lagerbasis entsteht.

Ein besonderer Vorteil besteht darin, daß die Bremseinrichtung auf dem der Wagenkastenaußenwand zugewandten Ende des Motors vorgesehen ist, wobei die Bremseinrichtung ganz oder teilweise in den Motorraum eingesetzt ist und sogar durch die Motorkühlung gekühlt werden kann. Für eine günstige Motor-Kühlluftführung ist es von Vorteil, wenn der Kühlluft-Austritt an der Wagenkastenaußenwand vorgesehen wird. In dieser Anordnung ist auch die Bremseinrichtung für den Einbau und die Wartung besonders leicht zugängig.

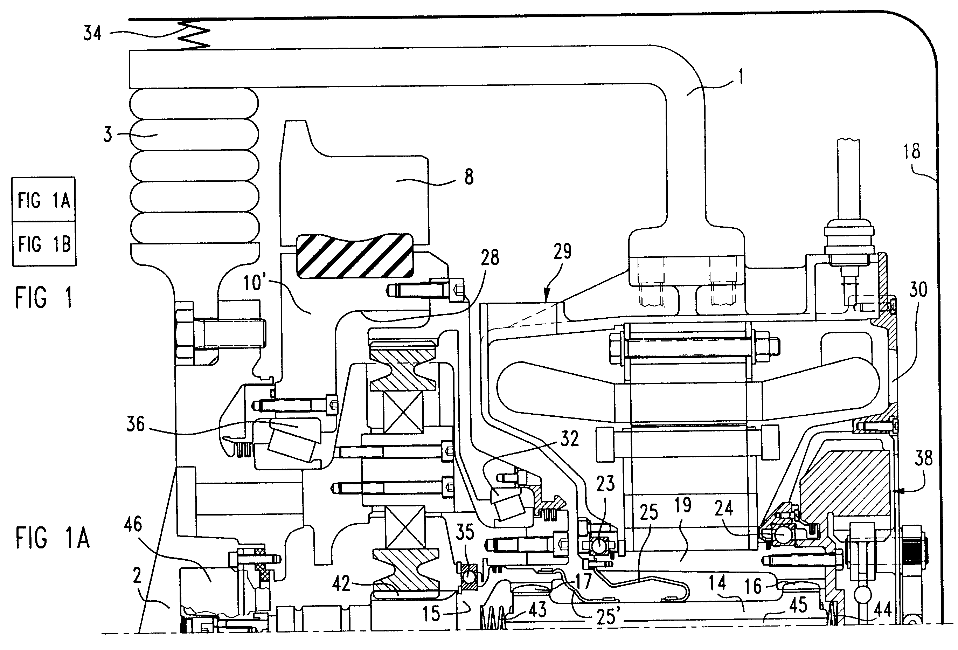

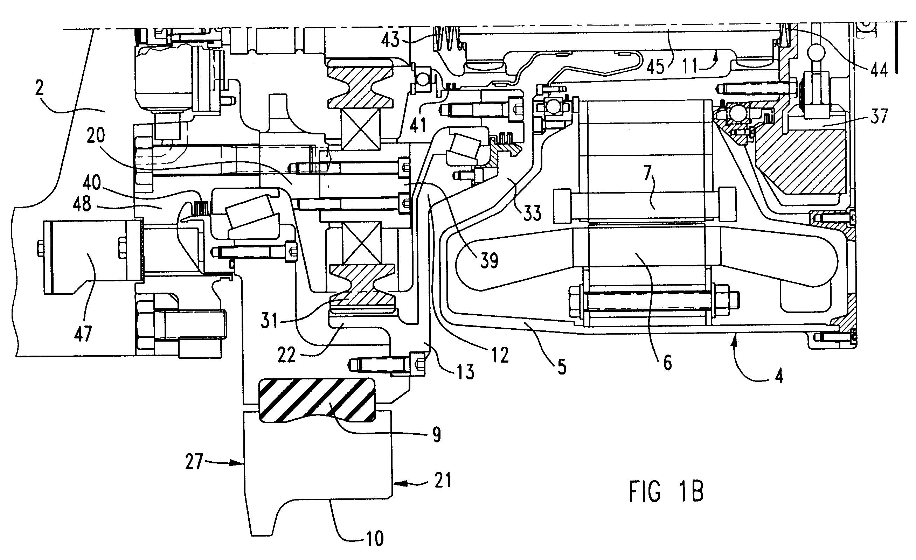

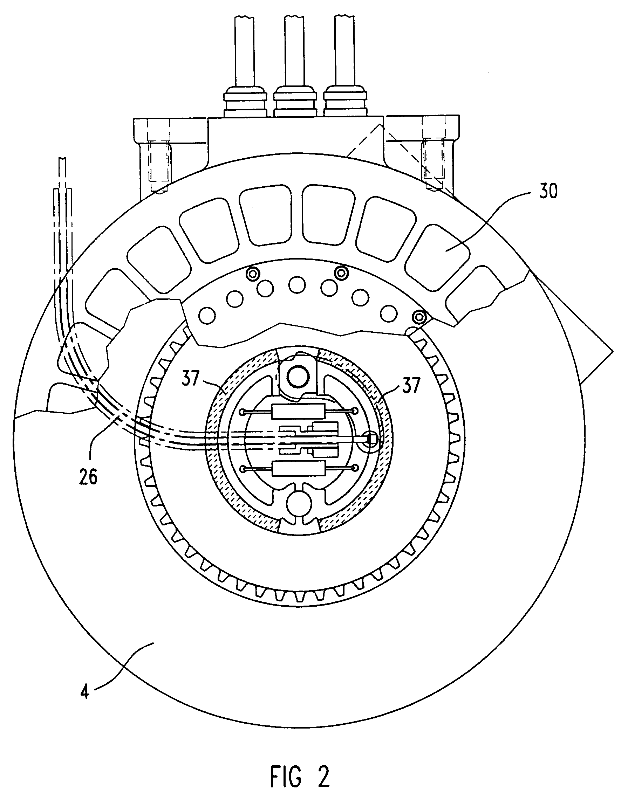

Zur weiteren Erläuterung der Erfindung sowie ihrer vorteilhaften Ausgestaltungen wird auf die Zeichnung Bezug genommen, in der ein Ausführungsbeispiel eines Einzelradantriebes mit Planetengetriebe im Schnitt dargestellt ist, wobei nach Figur 1 der Zeichnungsteil A die obere Antriebshälfte und der Zeichnungsteil B den unteren Antriebsteil zeigt. Figur 2 zeigt eine Ansicht des Motors mit integrierter Trommelbremse.

Der in einer vorteilhaften Ausführung gezeichnete Einzelradantrieb ist gegen ein Fahrwerk 1 eines Schienenfahrzeuges und dessen Achse 2 abgestützt. Hierzu ist zwischen dem Fahrwerk 1 und der feststehenden Achse 2 eine Primärfeder 3 angeordnet. Beim dem elektrischen Fahrmotor handelt es sich um einen Innenläufer-Motor 4 mit Motorgehäuse 5, Stator 6 und Rotor 7. Der Motor 4 ist im Wagenkasten zwischen einem Treibrad 8 und der Wagenkastenaußenwand 18, also axial neben dem Treibrad, angeordnet. Während der Stator 6 am feststehenden Motorgehäuse 5 befestigt wird, ist der Rotor 7 des Innenläufer-Motors 4 auf einer Hohlwelle 19 angebracht, welche über eine winkel- und axial-nachgiebige Kupplung oder Koppelungseinrichtung 11, im Ausführungsbeispiel sind die Kupplungsteile 16, 17 einer Bogenzahnkupplung dargestellt, mit einer Kupplungswelle 14 und einer Getriebewelle 15 in Drehmomentübertragungsverbindung steht.

Zwischen den mit der Motordrehzahl drehenden Motorteilen 7, 19, 11, 16, 17, 14, 15 und den mit der Raddrehzahl umlaufenden Teilen, nämlich dem Treibrad 8 und einem gemäß Ausführungsbeispiel motorseitig am Treibrad befestigten Getriebegehäuse 13, ist ein Planetengetriebe 12 angeordnet, wobei das Getriebe 12 überwiegend im Treibrad untergebracht ist. Nach der Erfindung ist der Motor 4 zwischen der Wagenkastenaußenwand 18 und der Treibradaußenseite 21 und das Getriebe 12 an der Treibradaußenseite 21 oder mittig im Treibrad 8 angeordnet. Diese Anordnung schafft noch mehr Platz für den Motor mit Bremseinrichtung 26, 37, 38 im begrenzten Raum zwischen dem Treibrad 8 und der Wagenkastenaußenwand 18 und hat eine günstigere Gewichtsverteilung für die Lager.

Das Planetengetriebe 12 ist so aufgebaut, daß ein Hohlrad 22 am Getriebegehäuse 13 befestigt ist und daß Planetenräder 31 im Planetenträger 20 auf Bolzen 39 des Getriebes gelagert sind. Dabei ist der Planetenträger 20 vorzugsweise einstückig ausgebildet, wobei der feststehende Planetenträger 20 an der feststehenden Achse 2 befestigt ist oder entsprechend dem Ausführungsbeispiel über einen Lagerdeckel 48 an der Achse 2 befestigt ist. Dabei kann das Treibrad 8 über ein äußeres Radlager 32 und ein inneres Radlager 36 auf dem Planetenträger 20 abgestützt sein oder entsprechend dem Ausführungsbeispiel kann ein äußeres Radlager 32 auf dem Planetenträger 20 und ein inneres Radlager 36 auf dem Lagerdeckel 48 abgestützt sein. In weiterer vorteilhafter Ausführung ist das Getriebe 12 zwischen dem inneren und dem äußeren Radlager 36 bzw. 32 angeordnet.

Gemäß einer nicht gezeichneten, abgewandelten Ausführung kann auch das innere Radlager 36 zwischen dem Getriebe 12 und dem äußeren Radlager 32 angeordnet werden. In weiterer, nicht gezeichneter Ausbildung kann das äußere Radlager 32 zwischen dem Getriebe 12 und dem inneren Radlager 36 angeordnet sein. Nach einer weiteren, nicht dargestellten Ausführung kann die Primärfeder 3 auch gegen den Planetenträger 20 oder gegen den Lagerdeckel 48 abgestützt sein.

Eine besonders kompakte und Einbauteile sparende Ausführung des erfindungsgemäßen Einzelradantriebes ergibt sich, wenn das Getriebegehäuse 13 oder wenigstens ein Teil des Getriebegehäuses an das Treibrad 8 bzw. die Radnabe 10' angeformt oder befestigt ist. Hierbei kann das sowohl mittig am Treibrad oder motorseitig am Treibrad angeordnete Getriebe durch Dichtungen 40, 41 gegen den Planetenträger 20 oder die Dichtung 40 gegen den Lagerdeckel 48 abgedichtet werden. Zusätzliche Lager werden eingespart, da die Radlager 32, 36 gleichzeitig die Lager für das Hohlrad 22 gegen den Planetenträger 20 bilden.

Gegenüber der schnell laufenden Getriebewelle 15 und dem mit der Raddrehzahl drehenden Hohlrad 22 bzw. Getriebegehäuse 13 laufen die Planetenräder 31 des Planetengetriebes 12 mit Planetendrehzahl um, während der stehende Planetenträger 20 an der stehenden Achse 2 oder über den Lagerdeckel 48 an der stehenden Achse 2 befestigt ist. Der Wagenkasten 18 ist über eine Sekundärfeder 34 gegenüber dem Fahrwerk 1 abgestützt.

Für eine kurze axiale Baulänge des Antriebsaggregates ist es vorteilhaft, daß das Getriebe in das Treibrad 8 integriert ist, wobei die Radnabe 10' eine Wandung des Getriebegehäuses 13 bildet. Ferner ist von Vorteil, wenn im Bereich einer Einziehung 33 des Motorgehäuses 5 das äußere Radlager 32 angeordnet ist.

Das am Treibrad sitzende Getriebe wird durch eine Radfeder 9 gegenüber dem Radreifen 10 abgefedert. Die Koppelungseinrichtung 11 des Antriebsaggregates überträgt das Motordrehmoment auf das Planetengetriebe und kann relativ klein und kompakt ausgeführt werden.

Eine weitere vorteilhafte Ausbildung des Antriebsaggregates wird dadurch erreicht, daß der Rotor 7 des Innenläufer-Motors 4 auf der Hohlwelle 19 angebracht ist, wobei die Hohlwelle über die winkel- und axial-nachgiebige Kupplung 16, 17 mit der Kupplungswelle 14 und der Getriebewelle 15 in Drehmomentverbindung steht und wobei die Hohlwelle 19 in Motorwellenlagern 23, 24 gelagert und die Getriebewelle 15 endseitig in einem Sonnenradlager 35 gegen den Planetenträger 20 und über Zahneingriffe 42 gegen die Planetenräder 31 abgestützt ist.

In weiterer Ausbildung ist die Kupplungswelle 14 durch stirnseitig angeordnete Federmittel 43, 44 in axialer Richtung zentriert. Gemäß Ausführungsbeispiel ist die Hohlwelle 19 des Motors 4 über ein erstes elastisches Dichtungselement 25 mit der Kupplungswelle 14 und die Getriebewelle 15 durch ein zweites elastisches Dichtungselement 25' mit der Kupplungswelle 14 verbunden, wobei die zwischen den Dichtungselementen 25, 25' und Wellenabschnitten gebildeten Schutzräume abgeschlossene Schmiermittelräume für die Kupplungsteile 16, 17 bilden. Ferner ist in der Kupplungswelle 14 eine Schmiermittelbohrung 45 zum innen liegenden Kupplungsteil 17 vorgesehen.

Einen weiteren Vorteil für die Montage und Demontage erreicht man dadurch, daß auf dem der Wagenkastenaußenwand 18 zugewandten Ende des Motors 4 eine Bremseinrichtung angeordnet ist. Die leicht zu wartende und gut zugängige Bremseinrichtung wird im Ausführungsbeispiel von einer Trommelbremse 38 gebildet, wobei deren mit Bremsbelägen versehenen Bremsbacken 37 über ein Gestänge oder einen Seilzug 26 von einer außerhalb des Motors angeordneten Betätigungseinrichtung aus betätigbar sind. Wie sich aus der Zeichnung ergibt, ist für einen kompakten Aufbau die Bremseinrichtung 37, 38 ganz in den Motorraum eingebaut. Für die Zugängigkeit und Kühlung ist die Bremseinrichtung zwischen dem Motor 4 und der Wagenkastenaußenwand 18 angeordnet, wobei die Bremseinrichtung durch die Motorbelüftung zusätzlich kühlbar ist. Die im Ausführungsbeispiel dargestellte Trommelbremse 38 wird dabei an ihrer Außenfläche von der Kühlabluft des Motors gekühlt. Zusätzlich kann - nicht dargestellt - der Innenraum der Trommelbremse wirkungsvoll durch einen Nebenkanal direkt vom Kühllufteinlaß 29 her mit Frischluft gekühlt werden. Mit 29 ist dabei ein Kühllufteinlaß zum Motorgehäuse und mit 30 ein Kühlluftauslaß vom Motorgehäuse gegen die Wagenkastenaußenwand 18 bzw. die Bremseinrichtung vorgesehen.

In weiterer Ausbildung der Erfindung ist es von Vorteil, dem Antriebsaggregat einen Drehzahlgeber 46 zuzuordnen und diesen vorzugsweise von der Radinnenseite her zugänglich auf einer Verlängerung der Getriebewelle 15 vorzusehen.

Nach einer weiteren Ausbildung ist ebenfalls von der Radinnenseite her gegen einen Deckel am Treibrad 8 ein Erdungskontakt 47 angeordnet, derart, daß hierdurch ein möglichst direkter Stromfluß zum Radreifen 10 möglich ist.

## Patentansprüche

1. Einzelradantrieb für ein elektrisch angetriebenes Fahrzeug, bei dem sich ein Fahrwerk (1) über eine Primärfeder (3) an einer stehenden Achse (2) abstützt, wobei ein Innenläufer-Motor (4) mit seinem Stator (6) am Fahrwerk befestigt ist, wobei ein Treibrad (8) an einem stehenden Träger (20; 48) drehbar gelagert ist und der Rotor (7) des Motors (4) sein Drehmoment über eine winkel- und axial-nachgiebige Koppelungseinrichtung (11; 16, 17), eine Getriebewelle (15) und ein Planetengetriebe (12) zum Treibrad überträgt, **dadurch gekennzeichnet,** daß der Planetenträger (20) des Getriebes (12) an der Achse (2) befestigt ist, daß das Treibrad (8) über ein äußeres Radlager (32) und ein inneres Radlager (36) auf dem Planetenträger (20) abgestützt ist und daß das Getriebe (12) zwischen dem inneren und dem äußeren Radlager (36, 32) angeordnet ist.

2. Einzelradantrieb nach Anspruch 1, **dadurch gekennzeichnet,** daß der Motor (4) zwischen der Wagenkastenaußenwand (18) und der Treibradaußenseite (21) und daß das Getriebe (12) an der Treibradaußenseite (21) oder mittig im Treibrad (8) angeordnet ist.

3. Einzelradantrieb nach Anspruch 1, **dadurch gekennzeichnet,** daß das Hohlrad (22) des Planetengetriebes (12) am Getriebegehäuse (13) befestigt ist und daß die Planetenräder (31) im Planetenträger (20) auf Bolzen (39) gelagert sind.

4. Einzelradantrieb nach Anspruch 1 oder 3, **dadurch gekennzeichnet,** daß der Planetenträger (20) einstückig ausgebildet ist.

5. Einzelradantrieb nach einem der Ansprüche 1 bis 4, **dadurch gekennzeichnet,** daß der Planetenträger (20) über einen Lagerdeckel (48) an der Achse (2) befestigt ist und daß das Treibrad (8) über ein äußeres Radlager (32) auf dem Planetenträger (20) und über ein inneres Radlager (36) auf dem mit dem Planetenträger (20) befestigbaren Lagerdeckel (48) abgestützt ist.

6. Einzelradantrieb nach einem der Ansprüche 1 bis 5, **dadurch gekennzeichnet,** daß das innere Radlager (36) zwischen dem Getriebe (12) und dem äußeren Radlager (32) angeordnet ist.

7. Einzelradantrieb nach einem der Ansprüche 1 bis 6, **dadurch gekennzeichnet,** daß die Primärfeder (3) gegen den Lagerdeckel (48) oder den Planetenträger (20) abgestützt ist.

8. Einzelradantrieb nach einem der Ansprüche 1 bis 7, **dadurch gekennzeichnet,** daß das Getriebegehäuse (13) oder wenigstens ein Teil des Getriebegehäuses an das Treibrad (8) angeformt oder befestigt ist.

9. Einzelradantrieb nach einem der Ansprüche 1 bis 8, **dadurch gekennzeichnet,** daß das an der Treibradaußenseite (21) angebrachte Getriebegehäuse (13) durch eine Dichtung (41) gegen den Planetenträger (20) abgedichtet ist.

10. Einzelradantrieb nach einem der Ansprüche 1 bis 9, **dadurch gekennzeichnet,** daß das an der Treibradinnenseite (27) angebrachte Getriebegehäuse (13) durch eine Dichtung (40) gegen den Planetenträger (20) oder den Lagerdeckel (48) abgedichtet ist.

11. Einzelradantrieb nach einem der Ansprüche 1 bis 10, **dadurch gekennzeichnet,** daß die Radlager (32, 36) gleichzeitig die Lager für das Hohlrad (22) gegen den Planetenträger (20) oder den Lagerdeckel (48) bilden.

12. Einzelradantrieb nach einem der Ansprüche 1 bis 11, **dadurch gekennzeichnet,** daß die Radnabe (10') eine Wandung des Getriebegehäuses (13) bildet.

13. Einzelradantrieb nach einem der Ansprüche 1 bis 12, **dadurch gekennzeichnet,** daß im Bereich einer Einziehung (33) des Motorgehäuses (5) das äußere Radlager (32) angeordnet ist.

14. Einzelradantrieb nach einem der Ansprüche 1 bis 13, **dadurch gekennzeichnet,** daß der Rotor (7) des Innenläufer-Motors (4) auf einer Hohlwelle (19) angebracht ist, wobei die Hohlwelle über eine winkel- und axial-nachgiebige Kupplung (16, 17) mit einer Kupplungswelle (14) und einer Getriebewelle (15) in Drehmomentverbindung steht, wobei die Hohlwelle (19) in Motorwellenlagern (23, 24) gelagert und die Getriebewelle (15) endseitig in einem Sonnenradlager (35) gegen den Planetenträger (20) und über Zahneingriffe (42) gegen die Planetenräder (31) abgestützt ist.

15. Einzelradantrieb nach einem der Ansprüche 1 bis 14, **dadurch gekennzeichnet,** daß die Kupplungswelle (14) durch stirnseitig angeordnete Federmittel (43, 44) in axialer Richtung zentriert ist.

16. Einzelradantrieb nach einem der Ansprüche 1 bis 15, **dadurch gekennzeichnet,** daß die Hohlwelle (19) des Motors (4) über ein elastisches Dichtungselement (25) mit der Kupplungswelle (14) verbunden ist, daß die Getriebewelle (15) durch ein elastisches Dichtungselement (25') mit der Kupplungswelle (14) verbunden ist und daß die zwischen den Dichtungselementen (25, 25') und Wellenabschnitten gebildeten Schutzräume abgeschlossene Schmiermittelräume für die Kupplungsteile (16, 17) bilden.

17. Einzelradantrieb nach einem der Ansprüche 1 bis 16, **dadurch gekennzeichnet,** daß in der Kupplungswelle (14) eine Schmiermittelbohrung (45) zum innen liegenden Kupplungsteil (17) vorgesehen ist.

18. Einzelradantrieb nach einem der Ansprüche 1 bis 17, **dadurch gekennzeichnet,** daß eine Bremseinrichtung (26, 37, 38) ganz oder teilweise in den Motorraum eingebaut ist.

19. Einzelradantrieb nach Anspruch 18, **dadurch gekennzeichnet,** daß die Bremseinrichtung als Trommelbremse (38) ausgebildet ist, wobei die Bremse über ein Gestänge oder einen Seilzug (26) von einer außerhalb des Motors angeordneten Betätigungseinrichtung betätigbar ist.

20. Einzelradantrieb nach Anspruch 18, **dadurch gekennzeichnet,** daß die Bremseinrichtung aus einer mit Motordrehzahl umlaufenden Bremsscheibe und einer stehenden Bremszange od.dgl. sowie Bremsbelägen besteht.

21. Einzelradantrieb nach einem der Ansprüche 1 bis 20, **dadurch gekennzeichnet,** daß die Bremseinrichtung zwischen dem Motor (4) und der Wagenkastenaußenwand (18) angeordnet ist.

22. Einzelradantrieb nach einem der Ansprüche 1 bis 21, **dadurch gekennzeichnet,** daß die Bremseinrichtung durch die Motorbelüftung zusätzlich kühlbar ist.

23. Einzelradantrieb nach einem der Ansprüche 1 bis 22, **dadurch gekennzeichnet,** daß die Bremseinrichtung über einen Nebenkanal vom Kühllufteinlaß aus mit Frischluft kühlbar ist.

24. Einzelradantrieb nach einem der Ansprüche 1 bis 23, **dadurch gekennzeichnet,** daß auf einer Verlängerung der Getriebewelle (15) ein Drehzahlgeber (46) angeordnet ist.

25. Einzelradantrieb nach einem der Ansprüche 1 bis 24, **dadurch gekennzeichnet,** daß auf der Radinnenseite (27) des Treibrades (8) ein Erdungskontakt (47) vorgesehen ist.

## Claims

1. Single-wheel drive for an electrically driven vehicle, in which a chassis (1) is stayed on a vertical axle (2) by way of a primary spring (3), wherein an internal-rotor motor (4) is secured to the chassis by means of its stator (6), wherein a driving wheel (8) is rotatably mounted on a vertical carrier (20; 48), and the rotor (7) of the motor (4) transmits its torque to the driving wheel by way of a coupling device (11; 16, 17) which is angularly and axially flexible, a gear shaft (15) and a planetary gear unit (12), characterised in that the planetary carrier (20) of the gear unit (12) is secured to the axle (2), in that the driving wheel (8) is stayed on the planetary carrier (20) by way of an outer wheel bearing (32) and an inner wheel bearing (36), and in that the gear unit (12) is arranged between the inner and the outer wheel bearings (36, 32).

2. Single-wheel drive according to claim 1, characterised in that the motor (4) is arranged between the outer car-body wall (18) and the driving-wheel outside (21), and in that the gear unit (12) is arranged on the driving-wheel outside (21) or centrally in the driving wheel (8).

3. Single-wheel drive according to claim 1, characterised in that the ring gear (22) of the planetary gear unit (12) is secured to the gear-unit housing (13), and in that the planetary wheels (31) are mounted in the planetary carrier (20) on pins (39).

4. Single-wheel drive according to claim 1 or 3, characterised in that the planetary carrier (20) is formed in one piece.

5. Single-wheel drive according to one of claims 1 to 4, characterised in that the planetary carrier (20) is secured to the axle (2) by way of a bearing cover (48), and in that the driving wheel (8) is stayed on the planetary carrier (20) by way of an outer wheel bearing (32) and is stayed on the bearing cover (48), which is secured to the planetary carrier (20), by way of an inner wheel bearing (36).

6. Single-wheel drive according to one of claims 1 to 5, characterised in that the inner wheel bearing (36) is arranged between the gear unit (12) and the outer wheel bearing (32).

7. Single-wheel drive according to one of claims 1 to 6, characterised in that the primary spring (3) is stayed in respect of the bearing cover (48) or the planetary carrier (20).

8. Single-wheel drive according to one of claims 1 to 7, characterised in that the gear-unit housing (13) or at least a portion of the gear-unit housing is pre-formed on or secured to the driving wheel (8).

9. Single-wheel drive according to one of claims 1 to 8, characterized in that the gear-unit housing (13), which is provided on the driving-wheel outside (21), is sealed off in respect of the planetary carrier (20) by means of a seal (41).

10. Single-wheel drive according to one of claims 1 to 9, characterised in that the gear-unit housing (13), which is provided on the driving-wheel inside (27), is sealed off in respect of the planetary carrier (20) or the bearing cover (48) by means of a seal (40).

11. Single-wheel drive according to one of claims 1 to 10, characterized in that the wheel bearings (32, 36) simultaneously form the bearings for the ring gear (22) in respect of the planetary carrier (20) or the bearing cover (48).

12. Single-wheel drive according to one of claims 1 to 11, characterised in that the wheel hub (10') forms a wall of the gear-unit housing (13).

13. Single-wheel drive according to one of claims 1 to 12, characterised in that the outer wheel bearing (32) is arranged in the region of a recess (33) of the motor housing (5).

14. Single-wheel drive according to one of claims 1 to 13, characterised in that the rotor (7) of the internal-rotor motor (4) is provided on a hollow shaft (19), wherein the hollow shaft communicates in terms of torque with a coupling shaft (14) and a gear shaft (15) by way of an angularly and axially flexible coupling (16, 17), wherein the hollow shaft (19) is mounted in motor-shaft bearings (23, 24) and the gear shaft (15) at the end is stayed in a sun-wheel bearing (35) in respect of the planetary carrier (20) and is stayed by way of meshing (42) in respect of the planetary wheels (31).

15. Single-wheel drive according to one of claims 1 to 14, characterised in that the coupling shaft (14) is centered in an axial direction by means of resilient means (43, 44) arranged at its end faces.

16. Single-wheel drive according to one of claims 1 to 15, characterised in that the hollow shaft (19) of the motor (4) is connected to the coupling shaft (14) by way of an elastic sealing element (25), in that the gear shaft (15) is connected to the coupling shaft (14) by way of an elastic sealing element (25'), and in that the protective compartments formed between the sealing elements (25, 25') and shaft-sections form shut-off lubricant compartments for the coupling portions (16, 17).

17. Single-wheel drive according to one of claims 1 to 16, characterised in that a lubricant bore hole (45) for the coupling portion (17) lying on the inside is provided in the coupling shaft (14).

18. Single-wheel drive according to one of claims 1 to 17, characterised in that a braking device (26, 37, 38) is installed completely or partly in the motor compartment.

19. Single-wheel drive according to claim 18, characterised in that the braking device is formed as a drum brake (38), wherein the brake can be actuated by way of a rod assembly or a Bowden cable (26) by an actuating device which is arranged outside the motor.

20. Single-wheel drive according to claim 18, characterised in that the braking device consists of a brake disk rotating at the speed of the motor and a vertical brake calliper or the like and also brake linings.

21. Single-wheel drive according to one of claims 1 to 20, characterised in that the braking device is arranged between the motor (4) and the outer car-body wall (18).

22. Single-wheel drive according to one of claims 1 to 21, characterised in that the braking device can be additionally cooled by means of the motor ventilation.

23. Single-wheel drive according to one of claims 1 to 22, characterised in that the braking device can be cooled with fresh air from the cooling-air inlet by way of a subsidiary channel.

24. Single-wheel drive according to one of claims 1 to 23, characterised in that a speed transmitter (46) is arranged on an extension of the gear shaft (15).

25. Single-wheel drive according to one of claims 1 to 24, characterised in that an earthing contact (47) is provided on the wheel inside (27) of the driving wheel (8).

## Revendications

1. Entraînement de roue indépendante pour un véhicule à propulsion électrique, dans lequel un bogie (1) s'appuie par l'intermédiaire d'un ressort (3) primaire sur un essieu (2) fixe, un moteur (4) à induit intérieur étant fixé par son stator (6) sur le bogie, une roue (8) motrice étant montée à rotation sur un support (20 ; 48) fixe et le rotor (7) du moteur (4) transmettant son couple de rotation à la roue motrice par l'intermédiaire d'un dispositif (11 ; 16, 17) d'accouplement angulairement et axialement flexible, d'un arbre (15) de transmission et d'une transmission (12) à engrenages planétaires, **caractérisé** en ce que le porte-satellites (20) de la transmission (12) est fixé sur l'essieu (2), en ce que la roue (8) motrice est soutenue sur le porte-satellites (20) par l'intermédiaire d'un palier (32) de roue extérieur et d'un palier (36) de roue intérieur, et en ce que la transmission (12) est disposée entre le palier (36) de roue intérieur et le palier (32) de roue extérieur.

2. Entraînement de roue indépendante suivant la revendication 1, **caractérisé** en ce que le moteur (4) est disposé entre la paroi (18) extérieure de la caisse de voiture et le côté (21) extérieur de la roue motrice, et en ce que la transmission (12) est disposée sur le côté (21) extérieur de la roue motrice ou centralement dans la roue (8) motrice.

3. Entraînement de roue indépendante suivant la revendication 1, **caractérisé** en ce que la couronne (22) de la transmission (12) à engrenages planétaires est fixée sur le carter (13) de transmission, et en ce que les satellites (31) sont montés dans le porte-satellites (20) sur des tourillons (39).

4. Entraînement de roue indépendante suivant la revendication 1 ou 3, **caractérisé** en ce que le porte-satellites (20) est réalisé d'un seul tenant.

5. Entraînement de roue indépendante suivant l'une des revendications 1 à 4, **caractérisé** en ce que le porte-satellites (20) est fixé sur l'essieu (2) par l'intermédiaire d'un chapeau (48) de palier, et en ce que la roue (8) motrice s'appuie par l'intermédiaire d'un palier (32) de roue extérieur sur le porte-satellites (20), et par l'intermédiaire d'un palier (36) de roue intérieur sur le chapeau (48) de palier pouvant être fixé sur le porte-satellites (20).

6. Entraînement de roue indépendante suivant l'une des revendications 1 à 5, **caractérisé** en ce que le palier (36) de roue intérieur est disposé entre la transmission (12) et le palier (32) de roue extérieur.

7. Entraînement de roue indépendante suivant l'une des revendications 1 à 6, **caractérisé** en ce que le ressort (3) primaire s'appuie contre le chapeau (48) de palier ou le porte-satellites (20).

8. Entraînement de roue indépendante suivant l'une des revendications 1 à 7, **caractérisé** en ce que le carter (13) de transmission, ou au moins une partie du carter de transmission, est formé ou fixé sur la roue (8) motrice.

9. Entraînement de roue indépendante suivant l'une des revendications 1 à 8, **caractérisé** en ce que le carter (13) de transmission, installé sur le côté (21) extérieur de la roue motrice, est rendu étanche vis-à-vis du porte-satellites (20) par un joint (41) d'étanchéité.

10. Entraînement de roue indépendante suivant l'une des revendications 1 à 9, **caractérisé** en ce que le carter (13) de transmission, installé sur le côté (27) intérieur de la roue motrice, est rendu étanche vis-à-vis du porte-satellites (20) ou du chapeau (48) de palier par un joint (40) d'étanchéité.

11. Entraînement de roue indépendante suivant l'une des revendications 1 à 10, **caractérisé** en ce que les paliers (32, 36) de roue forment en même temps les paliers pour la couronne (22) vis-à-vis du porte-satellites (20) et du chapeau (48) de palier.

12. Entraînement de roue indépendante suivant l'une des revendications 1 à 11, **caractérisé** en ce que le moyeu (10') de roue forme une paroi du carter (13) de transmission.

13. Entraînement de roue indépendante suivant l'une des revendications 1 à 12, **caractérisé** en ce que le palier (32) de roue extérieur est disposé dans la région d'une partie rétrécie (33) du carter (5) de moteur.

14. Entraînement de roue indépendante suivant l'une des revendications 1 à 13, **caractérisé** en ce que le rotor (7) du moteur (4) à induit intérieur est monté sur un arbre (19) creux, l'arbre creux se trouvant en liaison de couple de rotation avec un arbre (14) d'accouplement et un arbre (15) de transmission par l'intermédiaire d'un accouplement (16, 17) angulairement et axialement flexible, l'arbre (19) creux étant monté dans des paliers (23, 24) de l'arbre du moteur et l'arbre (15) de transmission s'appuyant, à ses extrémités, dans un palier (35) de planétaire contre le porte-satellites (20), et par l'intermédiaire d'engrènements (42) contre les satellites (31).

15. Entraînement de roue indépendante suivant l'une des revendications 1 à 14, **caractérisé** en ce que l'arbre (14) d'accouplement est centré en direction axiale par des moyens (43, 44) de ressort disposés frontalement.

16. Entraînement de roue indépendante suivant l'une des revendications 1 à 15, **caractérisé** en ce que l'arbre (19) creux du moteur (4) est relié par l'intermédiaire d'un élément (25) d'étanchéité élastique à l'arbre (14) d'accouplement, en ce que l'arbre (15) de transmission est relié par l'intermédiaire d'un élément (25') d'étanchéité élastique à l'arbre (14) d'accouplement, et en ce que les chambres de protection formées entre les éléments (25, 25') d'étanchéité et les tronçons d'arbres forment des chambres de lubrifiant fermées pour les éléments (16, 17) d'accouplement.

17. Entraînement de roue indépendante suivant l'une des revendications 1 à 16, **caractérisé** en ce qu'il est prévu, dans l'arbre (14) d'accouplement, un perçage (45) pour du lubrifiant allant vers l'élément (17) d'accouplement situé en position intérieure.

18. Entraînement de roue indépendante suivant l'une des revendications 1 à 17, **caractérisé** en ce qu'un dispositif (26, 37, 38) de freinage est installé en totalité ou en partie dans le compartiment moteur.

19. Entraînement de roue indépendante suivant la revendication 18, **caractérisé** en ce que le dispositif de freinage est réalisé sous forme de frein (38) à tambour, le frein pouvant être actionné par un dispositif d'actionnement disposé en dehors du moteur, par l'intermédiaire d'un tringlerie ou d'un câble (26) de transmission.

20. Entraînement de roue indépendante suivant la revendication 18 **caractérisé** en ce que le dispositif de freinage est constitué d'un disque de frein tournant à la vitesse de rotation du moteur et d'un étrier de frein fixe ou analogue, ainsi que de garnitures de freins.

21. Entraînement de roue indépendante suivant l'une des revendications 1 à 20, **caractérisé** en ce que le dispositif de freinage est disposé entre le moteur (4) et la paroi (18) extérieure de la caisse de voiture.

22. Entraînement de roue indépendante suivant l'une des revendications 1 à 21, **caractérisé** en ce que le dispositif de freinage peut être en outre refroidi par le système de ventilation du moteur.

23. Entraînement de roue indépendante suivant l'une des revendications 1 à 22, **caractérisé** en ce que le dispositif de freinage peut être refroidi par de l'air frais provenant de l'admission d'air de refroidissement par l'intermédiaire d'un canal secondaire.

24. Entraînement de roue indépendante suivant l'une des revendications 1 à 23, **caractérisé** en ce qu'un transmetteur (46) de vitesse de rotation est disposé sur un prolongement de l'arbre (15) de transmission.

25. Entraînement de roue indépendante suivant l'une des revendications 1 à 24, **caractérisé** en ce qu'un contact (47) de mise à la terre est prévu sur le côté (27) intérieur de la roue (8) motrice.
